# EUROPEAN PATENT APPLICATION

(11) **EP 4 527 989 A1**
(43) Date of publication of application: **26.03.2025**
(21) Application number: 23831191.4
(22) Date of filing: 20.06.2023
(51) Int. Cl.: C25B 15/02, C25B 1/04, C25B 9/00

(54) **CONTROL DEVICE FOR HYDROGEN PRODUCTION FACILITY, HYDROGEN PRODUCTION FACILITY, METHOD FOR CONTROLLING HYDROGEN PRODUCTION FACILITY, AND CONTROL PROGRAM FOR HYDROGEN PRODUCTION FACILITY**

(30) Priority: 29.06.2022 JP 2022104240
(71) Applicant: Mitsubishi Heavy Industries, Ltd., Tokyo 100-8332 (JP)
(72) Inventor: ICHINOSE, Hikaru, Tokyo 100-8332 (JP)
(74) Representative: Studio Torta S.p.A.
(86) International application number: PCT/JP2023/022677
(87) International publication number: WO 2024/004745

(57) **Abstract**

A control system for a hydrogen production facility is a control system for controlling operation of a hydrogen production facility including at least one water electrolyzer. The control system includes: a required hydrogen flow rate acquisition part configured to acquire a required hydrogen flow rate that is a hydrogen generation amount required for the water electrolyzer; a conversion part configured to convert the required hydrogen flow rate into a current required to generate hydrogen at the required hydrogen flow rate at the water electrolyzer and acquire a provisional required current; and a first correction part configured to acquire a current set value to be provided to the water electrolyzer by correcting the provisional required current using a first correction factor based on a difference between the required hydrogen flow rate and an actual hydrogen flow rate that is a hydrogen generation amount generated actually at the water electrolyzer.

## Description

### Technical Field

The present disclosure relates to a control system for a hydrogen production facility, a hydrogen production facility, a method for controlling a hydrogen production facility and a control program for a hydrogen production facility.

The present application claims priority based on JP 2022-104240 filed in the Japan Patent Office on June 29, 2022, and is hereby incorporated by reference.

### Background Art

A water electrolyzer is known as an apparatus for manufacturing hydrogen.

Patent Document 1 discloses a system for manufacturing hydrogen by electrolyzing water in a water electrolyzer having an electrolytic cell including a solid electrolyte membrane. In the system of Patent Document 1, in order to efficiently generate hydrogen, the current supplied to the electrolytic cell is controlled based on the detection result of the pressure of hydrogen generated at the electrolytic cell.

### Citation List

### Patent Literature

Patent Document 1: JP 2002-129372 A

### Summary of Invention

### Technical Problem

In the related art, the current supplied to the water electrolyzer is often controlled based on the pressure of a storage part (accumulate header, or the like) in which the hydrogen gas generated at the water electrolyzer is stored. However, when the control is performed based only on the pressure of the storage part, the control is performed after the change at the hydrogen consumption amount at the destination (hydrogen consumption facility), to which the hydrogen is supplied from the storage part, appears as a pressure change of the storage part. Thus, there is a possibility that the response of the water electrolyzer is delayed and the pressure of the storage part required for the hydrogen consumption facility cannot be maintained. Additionally, the relationship between the hydrogen generation amount at the water electrolyzer and the current value of the rectifier for supplying the current to the water electrolyzer, may change due to factors such as deterioration of the water electrolyzer or control error of the rectifier. In this case, there is a possibility that the hydrogen generation amount generated at the water electrolyzer becomes smaller than expected and the pressure of the storage part required for the hydrogen consumption facility cannot be maintained.

In view of the above circumstances, it is an object of at least one embodiment of the present invention to provide a control system for a hydrogen production facility, a hydrogen production facility, a method for controlling a hydrogen production facility, and a control program for a hydrogen production facility, which can appropriately manufacture a necessary amount of hydrogen while reducing a delay in response to a load change.

### Solution to Problem

A control system for a hydrogen production facility according to at least one embodiment of the present invention, is a control system for controlling operation of a hydrogen production facility including at least one water electrolyzer.

The control system includes:
a required hydrogen flow rate acquisition part configured to acquire a required hydrogen flow rate that is a hydrogen generation amount required for the water electrolyzer;
a conversion part configured to convert the required hydrogen flow rate into a current required to generate hydrogen at the required hydrogen flow rate at the water electrolyzer and acquire a provisional required current; and
a first correction part configured to acquire a current set value to be provided to the water electrolyzer by correcting the provisional required current using a first correction factor based on a difference between the required hydrogen flow rate and an actual hydrogen flow rate that is a hydrogen generation amount generated actually at the water electrolyzer.

A hydrogen production facility according to at least one embodiment of the present invention, includes:
at least one water electrolyzer; and
the control system configured to control operation of the at least one water electrolyzer.

A method for controlling a hydrogen production facility according to at least one embodiment of the present invention, is a method for controlling operation of a hydrogen production facility including at least one water electrolyzer.

The method includes:
acquiring a required hydrogen flow rate that is a hydrogen generation amount required for the water electrolyzer;
converting the required hydrogen flow rate into a current required to generate hydrogen at the required hydrogen flow rate at the water electrolyzer and acquiring a provisional required current; and
acquiring a current set value to be provided to the water electrolyzer by correcting the provisional required current using a first correction factor based on a difference between the required hydrogen flow rate and an actual hydrogen flow rate that is a hydrogen generation amount generated actually at the water electrolyzer.

A control program for a hydrogen production facility according to at least one embodiment of the present invention, is a control program for controlling operation of a hydrogen production facility including at least one water electrolyzer.

The control program is configured to cause a computer to execute:
acquiring a required hydrogen flow rate that is a hydrogen generation amount required for the water electrolyzer;
converting the required hydrogen flow rate into a current required to generate hydrogen at the required hydrogen flow rate at the water electrolyzer and acquiring a provisional required current; and
acquiring a current set value to be provided to the water electrolyzer by correcting the provisional required current using a first correction factor based on a difference between the required hydrogen flow rate and an actual hydrogen flow rate that is a hydrogen generation amount generated actually at the water electrolyzer.

### Advantageous Effects of Invention

At least one embodiment of the present invention enables to provide a control system for a hydrogen production facility, a hydrogen production facility, a method for controlling a hydrogen production facility, and a control program for a hydrogen production facility, which can appropriately manufacture a necessary amount of hydrogen while reducing a delay in response to a load change.

### Brief Description of Drawings

FIG. 1 is a schematic diagram of a hydrogen production facility according to an embodiment.
FIG. 2 is a block diagram illustrating a configuration of a control system according to an embodiment.
FIG. 3 is a schematic diagram of a hydrogen production facility according to an embodiment.
FIG. 4 is a block diagram illustrating a configuration of a control system according to an embodiment.

### Description of Embodiments

Hereinafter, several embodiments of the present invention will be described with reference to the attached drawings. However, the dimensions, materials, shapes, and relative arrangements of the components described as embodiments or illustrated in the drawings are not intended to limit the scope of the present invention, and are merely illustrative examples.

### Configuration of Hydrogen Production Facility

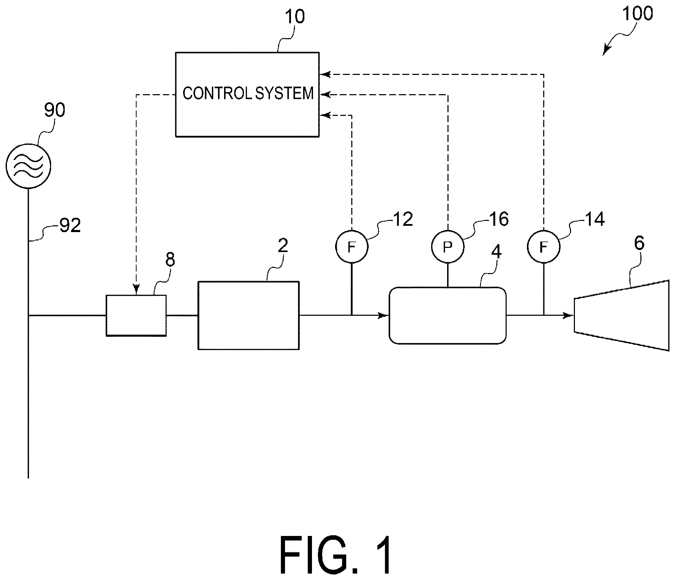

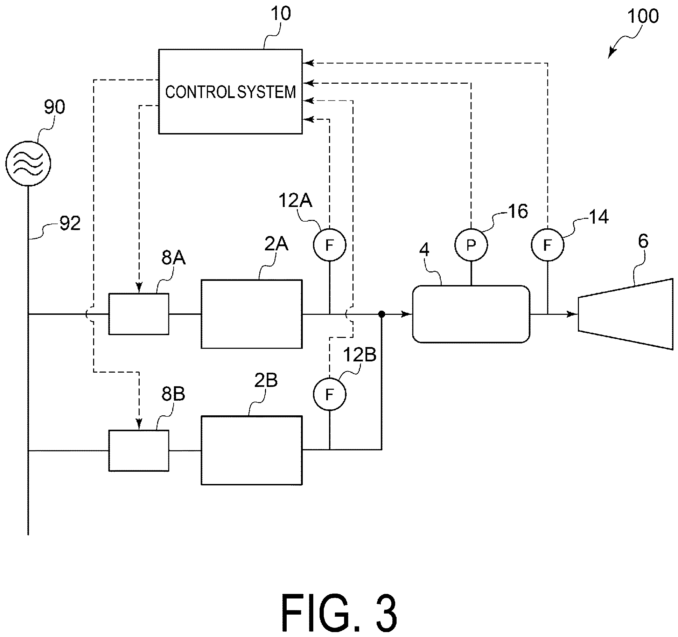

FIGS. 1 and 3 are each schematic diagram of a hydrogen production facility to which a control system according to an embodiment is applied. As illustrated in FIGS. 1 and 3, a hydrogen production facility 100 includes at least one water electrolyzer (hydrogen manufacturing device) 2 each configured to generate hydrogen, a storage part 4 for storing the hydrogen generated at the water electrolyzer 2, and a control system 10 for controlling the operation of the water electrolyzer 2.

The storage part 4 is configured to store gaseous hydrogen. The hydrogen stored in the storage part 4 may be supplied to a hydrogen consumption facility 6. The storage part 4 may have characteristics suitable for supplying hydrogen to the hydrogen consumption facility 6. The storage part 4 may include, for example, an accumulate header (header tank).

The hydrogen consumption facility 6 is not particularly limited. The hydrogen consumption facility 6 may include, for example, hydrogen combustion facilities configured to burn hydrogen (e.g., gas turbine facilities or iron manufacturing facilities), hydrogen liquefaction facilities configured to liquefy hydrogen, facilities to generate electricity by chemical reaction using hydrogen as fuel (e.g., power generation facilities including fuel cells such as SOFC (Solid Oxide Fuel Cell)), facilities to manufacture fuel using hydrogen as feedstock (e.g., fuel synthesis facilities or the like), or hydrogen gas stations configured to supply hydrogen to the equipment.

The water electrolyzer 2 is configured to generate hydrogen by electrolysis of water. The type of water electrolyzer 2 is not limited. The water electrolyzer 2 may be, for example, an alkaline water electrolyzer, a polymer electrolyte membrane (PEM) water electrolyzer, an anion exchange membrane (AEM) water electrolyzer, or a solid oxide electrolysis cell (SOEC) water electrolyzer.

Although not illustrated in detail, the water electrolyzer 2 includes an electrolytic tank for electrolyzing water. Water is supplied to the electrolytic tank. A current is supplied to the electrolytic tank via a rectifier 8. As a result, a voltage is applied between a pair of electrodes provided in the electrolytic tank to cause a current to flow, whereby water in the electrolytic tank is electrolyzed to generate hydrogen on the cathode side and oxygen on the anode side. Water (electrolyte solution) in which an electrolyte is dissolved may be supplied to the electrolytic tank and the water (water constituting the electrolyte solution) may be electrolyzed. The electrolyte may be an alkaline material such as potassium hydroxide (KOH).

The hydrogen gas generated on the cathode side is directed to a gas-liquid separator and/or dehumidifier to remove moisture, and then is directed to the storage part 4. The oxygen gas generated on the anode side is directed to a gas-liquid separator and/or dehumidifier to remove moisture, and then may be supplied to an oxygen consumption facility, or may be discharged to the outside.

In FIGS. 1 and 3, the rectifier 8 is supplied with current from a power source 90 via a transmission line 92. The power source 90 may be a power grid, or other power source, such as a power generation device or battery.

In some embodiments, the hydrogen production facility 100 may include a plurality of water electrolyzers 2. In the exemplary embodiment illustrated in FIG. 3, the hydrogen production facility 100 includes a plurality (specifically two) of water electrolyzers 2 (2A, 2B). The plurality of water electrolyzers 2 (2A, 2B) are supplied with current from a plurality of rectifiers 8 (8A, 8B), respectively. Note that the number of the water electrolyzers 2 included in the hydrogen production facility 100 does not matter.

The hydrogen production facility 100 may include a pressure sensor 16 configured to measure the pressure of the storage part 4.

The hydrogen production facility 100 may include a flow sensor 12 (12A, 12B) for measuring the flow rate of hydrogen generated at the water electrolyzer 2(2A, 2B). The flow sensor 12 may be provided on a line for directing hydrogen from the water electrolyzer 2 to the storage part 4, as illustrated in FIGS. 1 and 3.

The hydrogen production facility 100 may include a flow sensor 14 for measuring the consumption flow rate of hydrogen at the hydrogen consumption facility 6. The flow sensor 14 may be provided on a line for directing hydrogen from the storage part 4 to the hydrogen consumption facility 6, as illustrated in FIGS. 1 and 3.

The pressure sensor 16, the flow sensor 12, and/or the flow sensor 14 may be electrically connected to the control system 10, and a signal indicating measurement results by these sensors may be sent to the control system 10.

The control system 10 calculates a command value (current set value I) of a current to be supplied to the rectifier 8 (water electrolyzer 2) based on signals received from the pressure sensor 16, the flow sensor 12, and/or the flow sensor 14, or the like. The rectifier 8 is controlled so that the current supplied to the water electrolyzer 2 matches the calculated current set value I. Thus, the control system 10 controls the current supplied to the water electrolyzer 2.

In order to satisfy the demand for hydrogen by the hydrogen consumption facility 6, it is desirable to generate hydrogen corresponding to the hydrogen consumption amount at the water electrolyzer 2 and maintain the pressure of the storage part 4 at a predetermined set pressure or more.

### Control of Hydrogen Production Facility

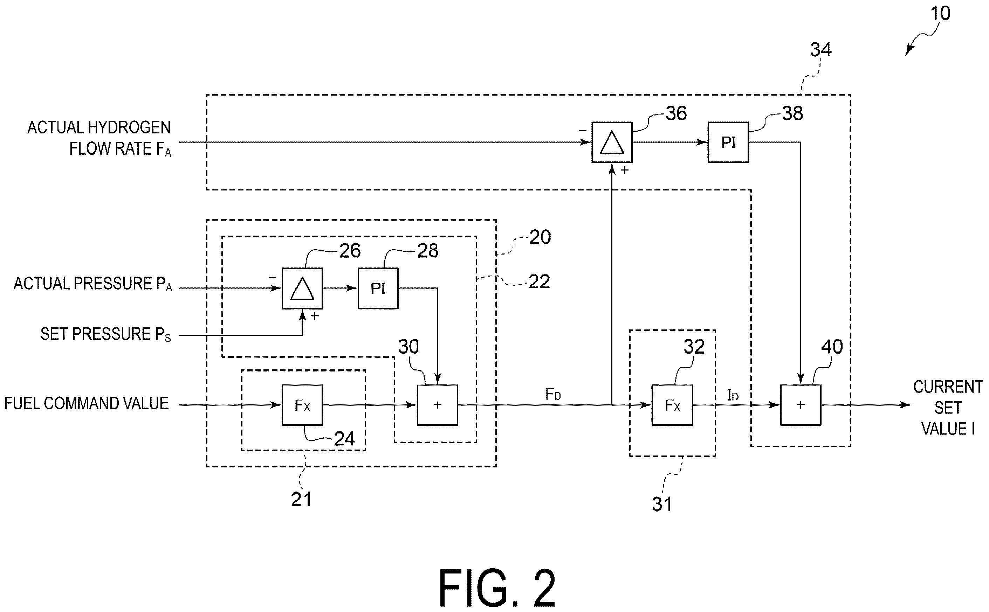

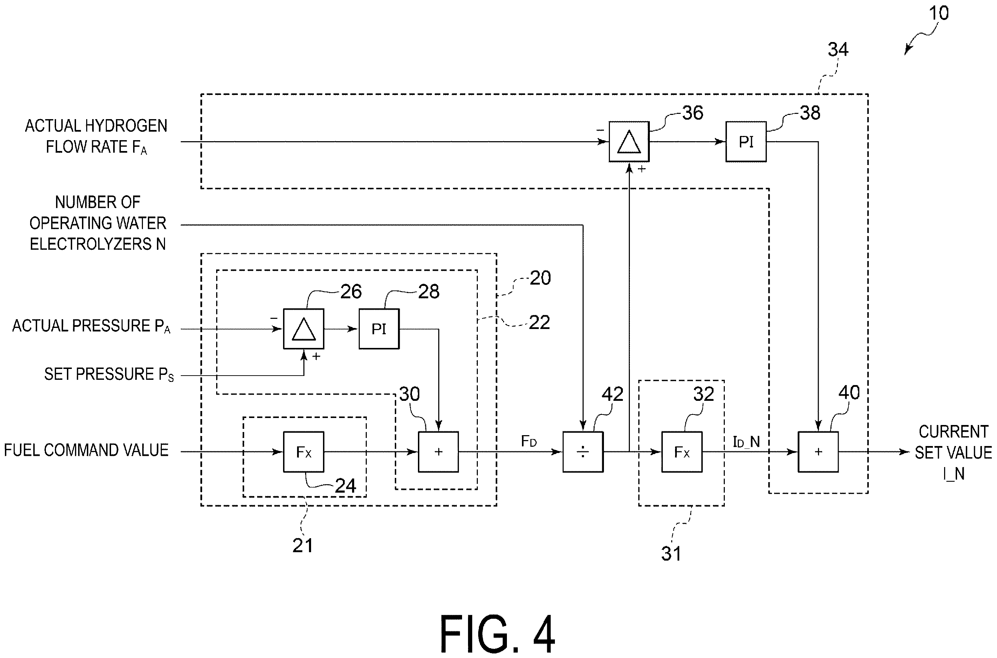

Hereinafter, a control system and a method for controlling the hydrogen production facility according to some embodiments will be described. Each of FIGS. 2 and 4 is a block diagram illustrating the configuration of a control system according to an embodiment. The control system according to the block diagram illustrated in FIG. 2 is applicable, for example, to the hydrogen production facility illustrated in FIG. 1. The control system according to the block diagram illustrated in FIG. 4 is applicable, for example, to the hydrogen production facility illustrated in FIG. 2.

As illustrated in FIGS. 2 and 4, the control system 10 according to an embodiment includes a required hydrogen flow rate acquisition part 20, a conversion part 31, and a first correction part 34.

The required hydrogen flow rate acquisition part 20 is configured to acquire a required hydrogen flow rate F_{D}, which is the hydrogen generation amount required for the water electrolyzer 2.

The required hydrogen flow rate acquisition part 20 may include a consumption flow rate acquisition part 21 configured to acquire the consumption flow rate of hydrogen at the hydrogen consumption facility 6 to which hydrogen is supplied from the storage part 4. The required hydrogen flow rate acquisition part 20 may acquire the consumption flow rate acquired by the consumption flow rate acquisition part 21 as the required hydrogen flow rate F_{D}. Alternatively, the required hydrogen flow rate acquisition part 20 may acquire the consumption flow rate acquired at the consumption flow rate acquisition part 21 and corrected at a second correction part 22 described below as the required hydrogen flow rate F_{D}.

As illustrated in FIGS. 2 and 4, the consumption flow rate acquisition part 21 may calculate the consumption flow rate of hydrogen based on a fuel command value that is a command value of the fuel flow rate supplied to the hydrogen consumption facility 6 (e.g., a gas turbine). In this case, the consumption flow rate acquisition part 21 may include a converter 24 that converts the fuel command value into a hydrogen flow rate. The converter 24 may be configured to convert the fuel command value into a hydrogen flow rate using a function that indicates a correlation between the fuel command value and the hydrogen flow rate. The consumption flow rate acquisition part 21 may acquire the fuel command value from a control system for controlling the hydrogen consumption facility 6.

Alternatively, the consumption flow rate acquisition part 21 may acquire the hydrogen flow rate supplied from the storage part 4 to the hydrogen consumption facility 6 as the consumption flow rate. In this case, the hydrogen flow rate measured by the flow sensor 14 (see FIGS. 1 and 3) may be acquired as the consumption flow rate.

The conversion part 31 is configured to convert the required hydrogen flow rate F_{D} acquired at the required hydrogen flow rate acquisition part 20 into the current required to generate hydrogen of the required hydrogen flow rate F_{D} at the water electrolyzer 2 to acquire a provisional required current I_{D}. The conversion part 31 may include a converter 32 configured to convert the required hydrogen flow rate F_{D} into a current value using a function representing a correlation between the required hydrogen flow rate F_{D} and the current required to generate hydrogen of the required hydrogen flow rate F_{D} at the water electrolyzer 2.

The first correction part 34 is configured to correct the provisional required current I_{D} using a first correction factor based on a difference (F_{D} - F_{A}) between the required hydrogen flow rate F_{D} acquired at the required hydrogen flow rate acquisition part 20 and an actual hydrogen flow rate F_{A} that is the actual hydrogen generation amount at the water electrolyzer 2, thereby acquiring the current set value I to be provided to the water electrolyzer 2.

The first correction part 34 illustrated in FIGS. 2 and 4 includes: a subtraction part 36 for calculating a difference (F_{D} - F_{A}) between the required hydrogen flow rate F_{D} and the actual hydrogen flow rate F_{A}; a proportional integrator 38 for calculating a first correction factor by performing proportional and integral operations based on the difference (F_{D} - F_{A}); and an adder 40 configured to add the first correction factor to the provisional required current I_{D} acquired at the converter 32. The actual hydrogen flow rate F_{A}, which is the hydrogen generation amount generated actually at the water electrolyzer 2, can be acquired, for example, as a measurement value by the flow sensor 12 (see FIGS. 1 and 3).

In the above-described embodiment, the current set value I is calculated from the required hydrogen flow rate F_{D} corresponding to the hydrogen consumption amount, so that the response delay to the change in the load (hydrogen consumption amount) can be reduced, as compared with the case where the current set value is calculated based only on the pressure of the storage part 4, for example. Since the current set value I is calculated by correcting the provisional required current I_{D} calculated from the required hydrogen flow rate F_{D} using the first correction factor based on the difference between the required hydrogen flow rate F_{D} and the actual hydrogen flow rate F_{A}. Thus, even when the relationship between the hydrogen generation amount at the water electrolyzer 2 and the current value of the rectifier 8 for applying a current to the water electrolyzer 2 changes due to deterioration of the electrolytic tank or a control error of the rectifier 8, or the like, the appropriate current set value I can be calculated in accordance with the change. Thus, by controlling the current of the water electrolyzer 2 based on the calculated current set value I, the necessary amount of hydrogen can be appropriately manufactured while reducing a delay in response to a load change.

Further, according to the above-described embodiment, the responsiveness to a load change is good, so that a mismatch between demand and supply of hydrogen can be reduced, and the pressure stability of the storage part 4 can be improved. Thus, for example, the capacity of the storage part 4 can be reduced, and the equipment cost can be decreased.

As described above, the first correction factor may be calculated by performing proportional and integral operations based on the difference between the required hydrogen flow rate F_{D} and the actual hydrogen flow rate F_{A}. Then, the first correction factor may be added to the provisional required current I_{D} to acquire the current set value I. Thus, even when the relationship between the hydrogen generation amount at the water electrolyzer 2 and the current value of the rectifier 8 for applying a current to the water electrolyzer 2 changes, the appropriate current set value I corresponding to the change can be calculated. Thus, the necessary amount of hydrogen can be appropriately manufactured while reducing the delay in response to the load change.

In some embodiments, as described above, the required hydrogen flow rate acquisition part 20 may acquire, as the required hydrogen flow rate F_{D}, the result after correcting, at the second correction part 22, the consumption flow rate acquired at the consumption flow rate acquisition part 21. The second correction part 22 is configured to acquire the required hydrogen flow rate F_{D} by correcting the consumption flow rate acquired by the consumption flow rate acquisition part 21 using a second correction factor based on a difference (P_{S} - P_{A}) between a predetermined set pressure P_{S} of the storage part 4 and an actual pressure P_{A} of the storage part 4.

The second correction part 22 illustrated in FIGS. 2 and 4 includes: a subtraction part 26 for calculating a difference (P_{S} - P_{A}) between the set pressure P_{S} and the actual pressure P_{A} of the storage part 4; a proportional integrator 28 for calculating a second correction factor by performing proportional and integral operations based on the difference (P_{S} - P_{A}); and an adder 30 configured to add the second correction factor to the consumption flow rate acquired at the consumption flow rate acquisition part 21. The set pressure P_{S} of the storage part 4 may be stored in advance at the storage device of the control system 10, or the like, and the second correction part 22 may acquire the set pressure P_{S} from the storage device. The second correction part 22 may acquire the measurement value by the pressure sensor 16 as the actual pressure P_{A} of the storage part 4.

As described above, by calculating the current set value I based on the required hydrogen flow rate F_{D} corresponding to the hydrogen consumption amount and operating the water electrolyzer 2 based on the current set value I, it is possible to generate and supply the same amount of hydrogen as the consumption amount. On the other hand, when there is a delay in supply relative to consumption, the pressure of the storage part 4 cannot reach the original value (set pressure P_{S}). In this regard, in the above-described embodiment, the required hydrogen flow rate F_{D} is acquired by correcting the flow rate (consumption flow rate) of hydrogen supplied from the storage part 4 to the supply destination (hydrogen consumption facility 6) by using the second correction factor based on the difference (P_{S} - P_{A}) between the set pressure P_{S} and the actual pressure P_{A} of the storage part 4. Thus, by controlling the current of water electrolyzer 2 based on the current set value I calculated based on the required hydrogen flow rate F_{D}, the pressure of the storage part 4 can be brought close to the set pressure P_{S}. Thus, the necessary amount of hydrogen can be appropriately manufactured while easily maintaining the pressure of the storage part 4 at the set pressure P_{S} and reducing the delay in response to the load change.

As described above, in some embodiments, a second correction factor is calculated by performing proportional and integral operations based on the difference between the set pressure P_{S} and the actual pressure P_{A} of the storage part 4, and the required hydrogen flow rate F_{D} is acquired by adding the second correction factor to the consumption flow rate. Accordingly, the pressure of the storage part 4 can be brought close to the set pressure P_{S} by controlling the current of the water electrolyzer 2 based on the current set value I calculated based on the required hydrogen flow rate F_{D}. Thus, the necessary amount of hydrogen can be appropriately manufactured while easily maintaining the pressure of the storage part 4 at the set pressure P_{S} and reducing the delay in response to the load change.

In the exemplary embodiment illustrated in FIG. 4, the control system 10 includes a division part 42 configured to acquire the required hydrogen flow rate (F_{D}/N) per water electrolyzer 2 by dividing the required hydrogen flow rate F_{D} from the required hydrogen flow rate acquisition part 20 by a number N of the plurality of water electrolyzers 2.

In this embodiment, the conversion part 31 converts the required hydrogen flow rate (F_{D}/N) per water electrolyzer 2 to acquire the provisional required current I_{D}_N per water electrolyzer 2. The first correction part 34 calculates a first correction factor for each of the plurality of water electrolyzers 2. That is, the flow rate of hydrogen generated in each of the plurality of water electrolyzers 2 (actual hydrogen flow rate F_{A}) is acquired, and the first correction factor is calculated using a different actual hydrogen flow rate F_{A} for each water electrolyzer 2. The actual hydrogen flow rate F_{A} for each of the plurality of water electrolyzers 2 can be acquired by using the flow sensors 12A and 12B (see FIG. 3). Then, the first correction factor for each of the plurality of water electrolyzers 2 calculated by the first correction part 34 is added to the provisional required current I_{D}_N for each water electrolyzer 2 to acquire a current set value I_N for each water electrolyzer 2.

When the hydrogen production facility 100 includes a plurality of water electrolyzers 2, the manner in which the relationship between the hydrogen generation amount and the current value of the rectifier 8 changes is considered to be different for each of the plurality of water electrolyzers 2 due to individual differences in the electrolytic tank and the rectifier 8. In this regard, according to the above-described embodiment, a required hydrogen flow rate (F_{D}/N) per water electrolyzer is acquired by dividing the required hydrogen flow rate F_{D} by the number N of the water electrolyzers. Based on the acquired required hydrogen flow rate (F_{D}/N), the provisional required current I_{D}_N per one water electrolyzer 2 is acquired, and the provisional required current I_{D}_N is corrected using the first correction factor calculated for each water electrolyzer 2 to acquire the current set value I_N for each water electrolyzer 2. Thus, it is possible to calculate an appropriate current set value corresponding to a change in the relationship between the hydrogen generation amount and the current value of the rectifier 8 for each water electrolyzer while reducing the effect of individual differences in equipment. Thus, by controlling the currents of a plurality of water electrolyzers 2 based on the calculated current set values I_N, it is possible to appropriately manufacture the necessary amount of hydrogen while reducing a delay in response to a load change.

The contents described in the above embodiments are understood as follows, respectively, for example.

(1) A control system (10) for a hydrogen production facility (100) according to at least one embodiment of the present invention, is a control system for controlling operation of a hydrogen production facility including at least one water electrolyzer (2).

The control system includes:
a required hydrogen flow rate acquisition part (20) configured to acquire a required hydrogen flow rate (F_{D}) that is a hydrogen generation amount required for the water electrolyzer;
a conversion part (31) configured to convert the required hydrogen flow rate into a current required to generate hydrogen at the required hydrogen flow rate at the water electrolyzer and acquire a provisional required current (I_{D}); and
a first correction part (34) configured to acquire a current set value (I) to be provided to the water electrolyzer by correcting the provisional required current using a first correction factor based on a difference between the required hydrogen flow rate and an actual hydrogen flow rate (F_{A}) that is a hydrogen generation amount generated actually at the water electrolyzer.

In the configuration of above (1), the current set value is calculated from the required hydrogen flow rate corresponding to the hydrogen consumption amount, which can reduce a response delay to a load change (hydrogen consumption amount). In addition, the current set value is calculated by correcting the provisional required current calculated from the required hydrogen flow rate using the first correction factor based on the difference between the required hydrogen flow rate and the actual hydrogen flow rate. Thus, even when the relationship between the hydrogen generation amount at the water electrolyzer and the current value of the rectifier for applying a current to the water electrolyzer changes, an appropriate current set value corresponding to this change can be calculated. Thus, by controlling the current of the water electrolyzer based on the calculated current set value in this way, a necessary amount of hydrogen can be appropriately manufactured while reducing a response delay to a load change.

(2) In some embodiments, in the configuration of above (1),
the first correction part is configured to acquire the current set value by adding the first correction factor to the provisional required current.

According to the configuration of above (2), the current set value is calculated by adding the first correction factor based on the difference between the required hydrogen flow rate and the actual hydrogen flow rate to the provisional required current calculated from the required hydrogen flow rate. Thus, even when the relationship between the hydrogen generation amount at the water electrolyzer and the current value of the rectifier for applying a current to the water electrolyzer changes, an appropriate current set value corresponding to the change can be calculated. Thus, the necessary amount of hydrogen can be appropriately manufactured while reducing the delay in response to the load change.

(3) In some embodiments, in the configuration of above (1) or (2),
the first correction part is configured to calculate the first correction factor by performing proportional and integral operations based on a difference between the required hydrogen flow rate and the actual hydrogen flow rate.

According to the configuration of above (3), the first correction factor is calculated by performing proportional and integral operations based on a difference between the required hydrogen flow rate and the actual hydrogen flow rate. Thus, by correcting the provisional required current using the first correction factor, even when the relationship between the hydrogen generation amount at the water electrolyzer and the current value of the rectifier for applying a current to the water electrolyzer changes, an appropriate current set value corresponding to the change can be calculated. Thus, the necessary amount of hydrogen can be appropriately manufactured while reducing the delay in response to the load change.

(4) In some embodiments, in any of the configurations of above (1) to (3),
the required hydrogen flow rate acquisition part includes:
a consumption flow rate acquisition part (21) configured to acquire a consumption flow rate of hydrogen at a hydrogen consumption facility (6) with hydrogen supplied from a storage part (4) storing hydrogen generated at the water electrolyzer; and
a second correction part (22) configured to acquire the required hydrogen flow rate by correcting the consumption flow rate using a second correction factor based on a difference between a set pressure (P_{S}) predetermined of the storage part and an actual pressure (P_{A}) of the storage part.

As described in (1) above, by calculating the current set value based on the required hydrogen flow rate corresponding to the hydrogen consumption amount and operating the water electrolyzer based on the current set value, it is possible to generate and supply the same amount of hydrogen as the consumption amount. On the other hand, when there is a delay in supply relative to consumption, the pressure of the storage part cannot reach the original value (set pressure). In this regard, in the configuration of above (4), the required hydrogen flow rate FD is acquired by correcting the flow rate (consumption flow rate) of hydrogen supplied from the storage part to the supply destination (hydrogen consumption facility) by using the second correction factor based on the difference between the set pressure and the actual pressure of the storage part. Thus, by controlling the current of water electrolyzer based on the current set value calculated according to the required hydrogen flow rate, the pressure of the storage part can be brought close to the set pressure. Thus, according to the configuration of above (4), the necessary amount of hydrogen can be appropriately manufactured while making it easy to maintain the pressure of the storage part 4 at the set pressure PS and reducing the delay in response to the load change.

(5) In some embodiments, in the configuration of above (4),
the second correction part is configured to acquire the required hydrogen flow rate by adding the second correction factor to the consumption flow rate.

According to the configuration of above (5), the required hydrogen flow rate is acquired by adding the second correction factor based on the difference between the set pressure and actual pressure of the storage part to the flow rate (consumption flow rate) of hydrogen supplied from the storage part to the supply destination (hydrogen consumption facility). Accordingly, the pressure of the storage part can be brought close to the set pressure by controlling the current of the water electrolyzer based on the current set value calculated according to the required hydrogen flow rate. Thus, the necessary amount of hydrogen can be appropriately manufactured while making it easy to maintain the pressure of the storage part at the set pressure and reducing the delay in response to the load change.

(6) In some embodiments, in the configuration of above (4) or (5),
the second correction part is configured to calculate the second correction factor by performing proportional and integral operations based on a difference between the set pressure and the actual pressure of the storage part.

According to the configuration of above (6), the second correction factor is calculated by performing proportional and integral operations based on a difference between the set pressure and the actual pressure of the storage part. Accordingly, the pressure of the storage part can be brought close to the set pressure, by correcting the consumption flow rate of hydrogen using the second correction factor to acquire the required hydrogen flow rate and controlling the current of the water electrolyzer based on the current set value calculated based on the required hydrogen flow rate. Thus, the necessary amount of hydrogen can be appropriately manufactured while making it easy to maintain the pressure of the storage part at the set pressure and reducing the delay in response to the load change.

(7) In some embodiments, in any of the configurations of above (1) to (6),
the at least one water electrolyzer includes:
the at least one water electrolyzer includes a plurality of water electrolyzers (2A, 2B),
the control system includes a division part (42) configured to divide the required hydrogen flow rate by a number (N) of the plurality of water electrolyzers to acquire a required hydrogen flow rate per water electrolyzer,
the conversion part is configured to convert the required hydrogen flow rate per water electrolyzer to acquire a provisional required current (I_{D}_N) per water electrolyzer, and
the first correction part is configured to add the first correction factor calculated for each of the plurality of water electrolyzers to the provisional required current per water electrolyzer to acquire a current set value (I_N) for each of the plurality of water electrolyzers.

When the hydrogen production facility includes a plurality of water electrolyzers, the manner in which the relationship between the hydrogen generation amount and the current value of the rectifier changes, is considered to be different for each of the plurality of water electrolyzers due to individual differences in the electrolytic tank and the rectifier. In this regard, according to the configuration of above (7), the required hydrogen flow rate per water electrolyzer is acquired by dividing the required hydrogen flow rate by the number of the water electrolyzers. Based on the acquired required hydrogen flow rate, the provisional required current per one water electrolyzer is acquired, and the provisional required current is corrected using the first correction factor calculated for each water electrolyzer to acquire the current set value for each water electrolyzer. Thus, it is possible to calculate an appropriate current set value corresponding to a change in the relationship between the hydrogen generation amount and the current value of the rectifier for each water electrolyzer while reducing the effect of individual differences in equipment. Thus, by controlling the currents of a plurality of water electrolyzers based on the calculated current set values, it is possible to appropriately manufacture the necessary amount of hydrogen while reducing a delay in response to a load change.

(8) A hydrogen production facility (100) according to at least one embodiment of the present invention, includes:
at least one water electrolyzer (2); and
the control system (10) according to any one of above (1) to (7) configured to control operation of the at least one water electrolyzer.

In the configuration of above (8), the current set value is calculated from the required hydrogen flow rate corresponding to the hydrogen consumption amount, which can reduce a response delay to a load change (hydrogen consumption amount). In addition, the current set value is calculated by correcting the provisional required current calculated from the required hydrogen flow rate using the first correction factor based on the difference between the required hydrogen flow rate and the actual hydrogen flow rate. Thus, even when the relationship between the hydrogen generation amount at the water electrolyzer and the current value of the rectifier for applying a current to the water electrolyzer changes, an appropriate current set value corresponding to this change can be calculated. Thus, by controlling the current of the water electrolyzer based on the calculated current set value in this way, a necessary amount of hydrogen can be appropriately manufactured while reducing a response delay to a load change.

(9) A method for controlling a hydrogen production facility according to at least one embodiment of the present invention, is a method for controlling operation of a hydrogen production facility (100) including at least one water electrolyzer (2).

The method includes:
acquiring a required hydrogen flow rate (F_{D}) that is a hydrogen generation amount required for the water electrolyzer;
converting the required hydrogen flow rate into a current required to generate hydrogen at the required hydrogen flow rate at the water electrolyzer and acquiring a provisional required current (I_{D}); and
acquiring a current set value (I) to be provided to the water electrolyzer by correcting the provisional required current using a first correction factor based on a difference between the required hydrogen flow rate and an actual hydrogen flow rate (F_{A}) that is a hydrogen generation amount generated actually at the water electrolyzer.

In the method of above (9), the current set value is calculated from the required hydrogen flow rate corresponding to the hydrogen consumption amount, which can reduce a response delay to a load change (hydrogen consumption amount). In addition, the current set value is calculated by correcting the provisional required current calculated from the required hydrogen flow rate using the first correction factor based on the difference between the required hydrogen flow rate and the actual hydrogen flow rate. Thus, even when the relationship between the hydrogen generation amount at the water electrolyzer and the current value of the rectifier for applying a current to the water electrolyzer changes, an appropriate current set value corresponding to this change can be calculated. Thus, by controlling the current of the water electrolyzer based on the calculated current set value in this way, a necessary amount of hydrogen can be appropriately manufactured while reducing a response delay to a load change.

(10) A control program for a hydrogen production facility according to at least one embodiment of the present invention, is a control program for controlling operation of a hydrogen production facility (100) including at least one water electrolyzer (2).

The control program is configured to cause a computer to execute:
acquiring a required hydrogen flow rate (F_{D}) that is a hydrogen generation amount required for the water electrolyzer;
converting the required hydrogen flow rate into a current required to generate hydrogen at the required hydrogen flow rate at the water electrolyzer and acquiring a provisional required current (I_{D}); and
acquiring a current set value (I) to be provided to the water electrolyzer by correcting the provisional required current using a first correction factor based on a difference between the required hydrogen flow rate and an actual hydrogen flow rate (F_{A}) that is a hydrogen generation amount generated actually at the water electrolyzer.

In the configuration of above (10), the current set value is calculated from the required hydrogen flow rate corresponding to the hydrogen consumption amount, which can reduce a response delay to a load change (hydrogen consumption amount). In addition, the current set value is calculated by correcting the provisional required current calculated from the required hydrogen flow rate using the first correction factor based on the difference between the required hydrogen flow rate and the actual hydrogen flow rate. Thus, even when the relationship between the hydrogen generation amount at the water electrolyzer and the current value of the rectifier for applying a current to the water electrolyzer changes, an appropriate current set value corresponding to this change can be calculated. Thus, by controlling the current of the water electrolyzer based on the calculated current set value in this way, a necessary amount of hydrogen can be appropriately manufactured while reducing a response delay to a load change.

Although the embodiments of the present invention have been described above, the present invention is not limited to the above-described embodiments, but also includes modifications of the above-described embodiments and a suitable combination of these embodiments.

In the present specification, an expression of a relative or absolute arrangement, such as "in a direction", "along a direction", "parallel", "orthogonal", "centered", "concentric" or "coaxial" shall not be construed as indicating the arrangement only in a strict literal sense, but also construed as expressing a state where the arrangement is relatively displaced by a tolerance, or by an angle or a distance to an extent with which the same function can be achieved.

For instance, an expression of a state where features are equal, such as "same", "equal", and "uniform" shall not be construed as indicating only a state where the features are equal in a strict literal sense, but also construed as expressing a state where there is a tolerance or a difference to an extent with which the same function can be achieved.

Further, in the present specification, expressions indicating a shape such as a rectangular shape or a cylindrical shape shall not be construed as indicating only a shape such as a rectangular shape or a cylindrical shape in a strict geometrical sense, but also as indicating a shape including a depression, a protrusion, a chamfered portion, or the like to the extent that the same effect can be acquired.

Furthermore, in the present specification, expressions such as "comprising" "including" or "having" one component are not intended as exclusive expressions that exclude the presence of other components.

### Reference Signs List

2 Water electrolyzer
4 Storage part
6 Hydrogen consumption facility
8 Rectifier
8A Rectifier
8B Rectifier
10 Control system
12 Flow sensor
12A Flow sensor
12B Flow sensor
14 Flow sensor
16 Pressure sensor
20 Required hydrogen flow rate acquisition part
21 Consumption flow rate acquisition part
22 Second correction part
24 Converter
26 Subtraction part
28 Proportional integrator
30 Adder
31 Conversion part
32 Converter
34 First correction part
36 Subtraction part
38 Proportional integrator
40 Adder
42 Division part
90 Power source
92 Transmission line
100 Hydrogen production facility

## Claims

1. A control system for a hydrogen production facility, controlling operation of a hydrogen production facility including at least one water electrolyzer, and comprising:
a required hydrogen flow rate acquisition part configured to acquire a required hydrogen flow rate that is a hydrogen generation amount required for the water electrolyzer;
a conversion part configured to convert the required hydrogen flow rate into a current required to generate hydrogen at the required hydrogen flow rate at the water electrolyzer and acquire a provisional required current; and
a first correction part configured to acquire a current set value to be provided to the water electrolyzer by correcting the provisional required current using a first correction factor based on a difference between the required hydrogen flow rate and an actual hydrogen flow rate that is a hydrogen generation amount generated actually at the water electrolyzer.

2. The control system for a hydrogen production facility according to claim 1, wherein
the first correction part is configured to acquire the current set value by adding the first correction factor to the provisional required current.

3. The control system for a hydrogen production facility according to claim 1 or 2, wherein
the first correction part is configured to calculate the first correction factor by performing proportional and integral operations based on a difference between the required hydrogen flow rate and the actual hydrogen flow rate.

4. The control system for a hydrogen production facility according to claim 1 or 2, wherein
the required hydrogen flow rate acquisition part includes:
a consumption flow rate acquisition part configured to acquire a consumption flow rate of hydrogen at a hydrogen consumption facility with hydrogen supplied from a storage part storing hydrogen generated at the water electrolyzer; and
a second correction part configured to acquire the required hydrogen flow rate by correcting the consumption flow rate using a second correction factor based on a difference between a predetermined set pressure of the storage part and an actual pressure of the storage part.

5. The control system for a hydrogen production facility according to claim 4, wherein
the second correction part is configured to acquire the required hydrogen flow rate by adding the second correction factor to the consumption flow rate.

6. The control system for a hydrogen production facility according to claim 4, wherein
the second correction part is configured to calculate the second correction factor by performing proportional and integral operations based on a difference between the set pressure and the actual pressure of the storage part.

7. The control system for a hydrogen production facility according to claim 1 or 2, wherein
the at least one water electrolyzer includes a plurality of water electrolyzers,
the control system includes a division part configured to divide the required hydrogen flow rate by a number of the plurality of water electrolyzers to acquire a required hydrogen flow rate per water electrolyzer,
the conversion part is configured to convert the required hydrogen flow rate per water electrolyzer to acquire a provisional required current per water electrolyzer, and
the first correction part is configured to add the first correction factor calculated for each of the plurality of water electrolyzers to the provisional required current per water electrolyzer to acquire a current set value for each of the plurality of water electrolyzers.

8. A hydrogen production facility, comprising:
at least one water electrolyzer; and
the control system according to claim 1 or 2 configured to control operation of the at least one water electrolyzer.

9. A control method for a hydrogen production facility, controlling operation of a hydrogen production facility including at least one water electrolyzer, and comprising:
acquiring a required hydrogen flow rate that is a hydrogen generation amount required for the water electrolyzer;
converting the required hydrogen flow rate into a current required to generate hydrogen at the required hydrogen flow rate at the water electrolyzer and acquiring a provisional required current; and
acquiring a current set value to be provided to the water electrolyzer by correcting the provisional required current using a first correction factor based on a difference between the required hydrogen flow rate and an actual hydrogen flow rate that is a hydrogen generation amount produced actually at the water electrolyzer.

10. A control program for a hydrogen production facility, controlling operation of a hydrogen production facility including at least one water electrolyzer, the control program causing a computer to execute:
acquiring a required hydrogen flow rate that is a hydrogen generation amount required for the water electrolyzer;
converting the required hydrogen flow rate into a current required to generate hydrogen at the required hydrogen flow rate at the water electrolyzer and acquiring a provisional required current; and
acquiring a current set value to be provided to the water electrolyzer by correcting the provisional required current using a first correction factor based on a difference between the required hydrogen flow rate and an actual hydrogen flow rate that is a hydrogen generation amount generated actually at the water electrolyzer.
